# EUROPÄISCHE PATENTSCHRIFT

(11) **EP 1 883 654 B1**
(45) Veröffentlichungstag und Bekanntmachung des Hinweises auf die Patenterteilung: **02.07.2014**
(21) Anmeldenummer: 06763083.0
(22) Anmeldetag: 03.05.2006
(51) Int. Cl.: C08B 37/00

(54) **VERFAHREN ZUR CHEMISCHEN MODIFIZIERUNG VON POLYSACCHARIDEN**
METHOD FOR CHEMICALLY MODIFYING POLYSACCHARIDES
PROCEDE POUR LA MODIFICATION CHIMIQUE DE POLYSACCHARIDES

(30) Priorität: 03.05.2005 DE 102005020552
(43) Veröffentlichungstag der Anmeldung: 06.02.2008
(73) Patentinhaber: Evonik Degussa GmbH, 45128 Essen (DE)
(72) Erfinder: SCHICK, Georg, Chester, VA 23831 (US); PASCALY, Matthias, 48153 Münster (DE); WILDMOSER, Stefan, 85293 Reichertshausen (DE); WENK, Hans, Henning, 45470 Mühlheim a. d. Ruhr (DE); JOHN, Kathrin, 22177 Hamburg (DE); KÖHLE, Hans-Jürgen, 63533 Mainhausen (DE)
(86) Internationale Anmeldenummer: PCT/EP2006/062020
(87) Internationale Veröffentlichungsnummer: WO 2006/117386

(56) Entgegenhaltungen:
- EP-A- 0 233 336
- EP-A- 0 582 142
- WO-A-03/064476
- DE-A1- 4 319 915
- DE-B- 1 063 506
- US-A- 2 464 081
- DATABASE WPI Section Ch, Week 199843 Derwent Publications Ltd., London, GB; Class A11, AN 1998-504489 XP002392263 -& RU 2 106 368 C1 (UNIV SAMARA TECHNICAL) 10. März 1998 (1998-03-10)

## Beschreibung

Gegenstand der vorliegenden Erfindung ist ein Verfahren zur chemischen Modifizierung von Polysacchariden mit Hilfe einer mechanischen Vorrichtung und mindestens eines Modifizierungsreagenzes.

Chemisch modifizierte Polysaccharide finden weit verbreitete Anwendung in den verschiedensten Bereichen. Am bekanntesten sind die Anwendungsgebiete als Verdickungsmittel, Emulgatoren, Schaumstabilisatoren, Dispergierhilfen, Klebstoffe, Leimungsmittel, Flockungsmittel, Haarkonditionierungsmittel, Baustoffadditive und Sorptionsmittel.

Das Ziel der Modifikation der Polysaccharide besteht beispielsweise in einer Verbesserung der Löslichkeit allgemein und insbesondere in einer gesteigerten Alkohollöslichkeit. Es können aber auch die emulgierenden Eigenschaften der Polysaccharide verbessert und/oder deren Thermostabilität erhöht werden; auch die Einführung chelatisierender oder geladener Gruppen kann ein interessanter Aspekt der chemischen Polysaccharid-Modifizierung sein. Durch Pfropfpolymerisation können aber auch polysaccharidische Polymere mit neuen Eigenschaften erhalten werden.

Generell haben chemisch modifizierte Polysaccharide gegenüber rein synthetischen Polymeren den Vorteil, dass sie biologisch abbaubar sind, was insbesondere bei der Entwicklung neuer Produkte immer stärker an Bedeutung gewinnt.

Einen Überblick über bekannte Reaktionen zur chemischen Modifikation von Polysacchariden gibt K. Engelskirchen ("Polysaccharid-Derivate", in "Houben-Weyl, Methoden der Organischen Chemie", Band E20/Teil 3 Makromolekulare Stoffe, Georg Thieme Verlag 1987).

Als bekannte Beispiele für Derivatisierungen von Polysacchariden seien die Carboxymethylierung mit Chloressigsäure oder Chloracetaten und die Methylierung mit Methylhalogeniden genannt (vgl.: D. Klemm et al., "Comprehensive Cellulose Chemistry Volume 2", Wiley-VCH, 1998, S. 221-234). Weit verbreitet ist aber auch die Hydroxyethylierung mit Ethylenoxid, die Hydroxypropylierung mit Propylenoxid (vgl.: D. Klemm et al., "Comprehensive Cellulose Chemistry Volume 2", Wiley-VCH, 1998, S. 235-246), die Amidierung von Pektinen mit Ammoniak bzw. einer Ammoniak-Lösung und die Veresterung mit Hilfe von Säuren, Anhydriden oder Säurechloriden. Breite Verwendung findet auch die Phosphatierung mit Orthophosphaten, die Etherbildung mit Epoxiden, Organohalogen-Verbindungen, wie z. B. Chlorhydrinen oder Michael-Akzeptoren, wie sie Acrylsäure-Derivate darstellen. Die genannten Reaktionen können auch in Gegenwart von Basen, Säuren oder Radikalstartern, die als Katalysatoren oder Reaktanden fungieren, durchgeführt werden.

Allgemein bekannt ist auch der hydrolytische, enzymatische, thermische oder oxidative Abbau der Polysaccharide zu Produkten mit verringertem Molekulargewicht oder aber die gegenteilige Quervernetzung, was zu höheren Molekulargewichten führt.

Die genannten unterschiedlichen Reaktionen zur chemischen Modifizierung von Polysacchariden sind nicht auf bestimmte Vertreter beschränkt; vielmehr kommen alle bekannten Polysaccharide, wie z.B. Pektine, Alginate, Carrageenane, Galactomannane wie Johannisbrotkernmehl oder Guarkernmehl, Stärken und Cellulosen in Frage. Weitere geeignete Stoffe sind z. B. die von Pilnik et al. aufgeführten Polysaccharide ("Polysaccharide", in "Ullmanns Encyklopädie der technischen Chemie", Bd. 19, Verlag Chemie Weinheim, 1980, S. 233-263), die als Bestandteil dieser Offenbarung gelten.

Bei allen genannten Reaktionen treten allerdings die geringe Löslichkeit und die ausgeprägten viskositätserhöhenden Eigenschaften der meisten Polysaccharide als nachteilig zu Tage, wodurch die chemische Modifizierung großtechnisch erschwert wird. Zur Umgehung dieser Probleme müssen die Reaktionen entweder in stark verdünnten Lösungen oder in Suspensionen durchgeführt werden. Nur für sehr wenige spezielle Anwendungen kommen Feststoffreaktionen mit pulverförmigen Ausgangsstoffen in Frage.

US 4,758,282 beschreibt die sogenannte "trockene" Kationisierung von Galactomannanen, wie z. B. Guar, mit Alkylidenepoxiden und Alkali- oder Erdalkalimetallhydroxiden in Gegenwart von Wasser und Siliciumdioxid. Als technisches Hilfsmittel wird bei diesem Verfahren ein Pflugscharmischer eingesetzt. Eine vergleichbare Derivatisierung von Stärke oder stärkehaltigen Substanzen ist in US 4,785,087 beschrieben. Auch in diesem Fall wird auf einen Pflugscharmischer als technisches Hilfsmittel zurückgegriffen.

Ein lösemittelfreies Derivatisierungsverfahren für Stärke beschreiben Meuser et al. in Starch/Stärke 1990, 42(9), Seiten 330 bis 336. Das hier beschriebene Verfahren bedient sich der chemischen Modifizierung in einem Extruder, wobei kationische Stärken und Carboxymethylstärken erhalten werden. Die Verwendung eines Extruders ist allerdings nur sehr eingeschränkt nutzbar, da neben den sehr ausgeprägten Scherkräften auch hohe Drücke und Temperaturen auftreten, die den Einsatz thermisch empfindlicher Modifikationsreagenzien ausschließen und außerdem zum Abbau des Polysaccharidgerüstes führen können. Diese unerwünschte Nebenreaktion wird in DE 4344156 A1 im Zusammenhang mit der Herstellung depolymerisierter Galactomannane beschrieben.

WO 03/064476 beschreibt ein Verfahren zur Herstellung von Cellulosecarbamat, bei dem eine Mischung aus Cellulose, Harnstoff, Wasser und einem alkalischen Hilfsstoff einer mechanischen Behandlung mit einem Walzwerk unterworfen wird, wobei die Mischung zwischen gegenläufigen Walzen aufgegeben wird, die mit unterschiedlichen Geschwindigkeiten rotieren können.

Werden die Reaktionen zur chemischen Modifizierung in wässrigen Lösungen durchgeführt, werden meist nur sehr geringe Substitutionsgrade der Polysaccharide erreicht, da die meisten funktionellen Gruppen, die zur Reaktion mit Polysacchariden fähig sind, auch mit Wasser reagieren. Lösemittel, die in der Lage wären, Polysaccharide zu lösen, wie z. B. Dimethylsulfoxid, Dimethylformamid, Dimethylacetamid und Pyridine, sind zumeist toxisch, umweltgefährdend und/oder technisch problematisch zu handhaben. Außerdem werden aufgrund der notwendigen starken Verdünnungen sehr große Lösemittelmengen benötigt, was die Prozesse zusätzlich unwirtschaftlich werden lässt.

Vorteile zeigen demgegenüber Reaktionen in Suspensionen oder Feststoffreaktionen, da diese weitaus geringere

Lösemittelmengen benötigen. In diesem Fall wird das Polysaccharid nicht vollständig gelöst, sondern es wird vielmehr durch geringe Lösemittelmengen ein Quellen der Feststoffpartikel erreicht, wodurch eine Diffusion der anschließend zugesetzten Verbindungen in die Polysaccharidteilchen ermöglicht wird. Nachteilig hierbei ist allerdings, dass die Polysaccharidpartikel nicht gleichmäßig vom Modifikationsreagenz durchdrungen werden können, weshalb mit dieser Verfahrensvariante keine homogen substituierten Produkte erhalten werden können. Die Oberfläche der Partikel wird vielmehr deutlich stärker modifiziert als die inneren Bereiche, was sich nachteilig auf die Produkteigenschaften und die Reproduzierbarkeit der Reaktion insgesamt auswirkt. Dieses Problem tritt um so ausgeprägter auf, je hydrophober das Modifizierungsreagenz ist. Ein weiterer Aspekt besteht darin, dass der gesamte Ablauf der Reaktion stark durch die Partikelgröße des Polysaccharids beeinflusst wird, wodurch eine einheitliche Reaktionsführung erschwert wird.

Aufgrund der geschilderten Nachteile des Standes der Technik hat sich für die vorliegende Erfindung die Aufgabe gestellt, ein Verfahren zur chemischen Modifizierung von Polysacchariden bereit zu stellen, welches mit Hilfe einer mechanischen Vorrichtung und mindestens eines Modifizierungsreagenzes durchgeführt wird. Mit diesem neuen Verfahren soll eine homogene und gleichzeitig reproduzierbare chemische Modifizierung möglich werden, wobei allerdings auf toxische und/oder umweltschädliche Lösemittel und Hilfsstoffe weitgehend verzichtet werden sollte. Wünschenswert ist ein Verfahren, welches möglichst universell für ein breites Spektrum von Reaktionstypen anwendbar ist und welches die Art der einzusetzenden Modifizierungsreagenzien möglichst wenig eingrenzt.

Gelöst wurde diese Aufgabe mit einem entsprechenden Verfahren, welches dadurch gekennzeichnet ist, dass die Polysaccharid-Komponente mindestens einmal einer solchen Behandlung mit einem Walzwerk unterworfen wird, dass mindestens zwei benachbarte und gegenläufige Walzen mit unterschiedlichen Geschwindigkeiten rotieren und die Polysaccharid-Komponente vor und/oder während der mechanischen Behandlung mit dem Modifizierungsreagenz vermischt wird und das Modifizierungsreagenz ausgewählt ist aus der Reihe Epoxide, Alkylhalogenide, Chloressigsäure, Chloracetate, Halogenhydrine, Mono- und Dialkylsulfate, Ammoniak, primäre oder sekundäre Alkyl- oder Arylamine, Acrylsäure, Acrylsäureester, Acrylamid, Maleamidsäurederivate, Carbonsäuren, Carbonsäurechloride, Carbonsäureanhydride und Mischungen dieser Verbindungen.

Überraschend konnte mit diesem neuen Verfahren festgestellt werden, dass die gewünschte chemische Modifizierung im Sinne einer Derivatisierung äußerst effizient an den verschiedensten Polysacchariden durchgeführt werden kann, wobei die Modifizierungsbreite zusätzlich erhöht ist. Zusätzlich wurde festgestellt,
dass nur sehr geringe Mengen an Flüssigkeit benötigt werden, wobei insbesondere Wasser als ökologisch und ökonomisch günstiges Lösemittel anstelle der sonst üblichen organischen Lösemittel eingesetzt werden kann. Besonders vorteilhaft ist das Verfahren für hydrophobe und nicht wasserlösliche Modifizierungsreagenzien, die so selbst in Gegenwart von Wasser homogen mit der Polysaccharidkomponente vermischt und zur Reaktion gebracht werden können.

Es war weiter überraschend, dass trotz der relativ starken Scherkräfte, die durch die gegenläufig rotierenden Walzen auftreten, negative Einflüsse, wie sie beispielsweise von den Extrudern gemäß Stand der Technik bekannt sind, nicht auftreten. Vielmehr bewirken diese starken Scherkräfte im vorliegenden Fall eine äußerst homogene Verteilung der Reagenzien im Polysaccharid, ohne dass diese Komponente vollständig in Lösung gebracht wird.

Für das erfindungsgemäße Verfahren hat es sich als vorteilhaft erwiesen, ein Zwei-, Drei- oder Vierwalzwerk einzusetzen, wobei technisch besonders vorteilhaft ein Dreiwalzwerk eingesetzt werden kann.

Falls aus wirtschaftlichen oder sonstigen Gründen eine Vorrichtung mit wenig Walzen zur Verfügung steht oder eine ausreichende Homogenisierung in einem Behandlungsschritt nicht erreicht wird, kann die mechanische Behandlung selbstverständlich auch beliebig oft wiederholt werden. In diesem Zusammenhang sieht die vorliegende Erfindung vor, dass insbesondere die mechanische Behandlung ein- bis dreimal wiederholt wird.

Es ist u. a. als erfindungswesentlich anzusehen, dass sich benachbarte Walzen gegenläufig bewegen, wobei sie zusätzlich unterschiedliche Rotationsgeschwindigkeiten aufweisen. Es ist als empfehlenswert anzusehen, wenn sich die Drehgeschwindigkeiten der benachbarten Walzen um 10 bis 500 % unterscheiden, wobei 100 bis 300 % zu bevorzugen sind und ein Drehgeschwindigkeitsunterschied von 200 % besonders bevorzugt wird.

Wie bereits angedeutet, ist die Polysaccharid-Komponente keinerlei Beschränkungen unterworfen. Aus diesem Grund kann sie auch aus allen bekannten Ausgangsmaterialien stammen, wobei Vertreter der Reihe Pektin, Galactomannane (insbesondere Johannisbrotkernmehl, Guarkernmehl, Cassia-, Tara- oder Tamarinden-Galactomannan), Alginate, Carrageenane, Xanthane, Scleroglucane, Stärken, Cellulosen, Gellane, Pullulane, Chitosane und beliebige Mischungen daraus bevorzugt Verwendung finden, was von der vorliegenden Erfindung ebenfalls berücksichtigt wird.

In bestimmten Anwendungsfällen des beanspruchten Verfahrens kann es günstig sein, die mechanische Bearbeitung und gleichzeitige chemische Modifizierung in Gegenwart mindestens eines Katalysators durchzuführen. Für diesen Fall stehen eine Reihe geeigneter Verbindungen zur Verfügung, wobei vorzugsweise Basen, Säuren oder Radikalstarter eingesetzt werden, wie sie aus dem Stand der Technik bekannt sind. Die Einsatzmenge kann dabei relativ breit gewählt werden, wobei allerdings als Untergrenze 0,1 Gew.-% und als Obergrenze 30 Gew.-% eingehalten werden sollten. Besonders gut ist das beanspruchte Verfahren durchzuführen, wenn der Katalaysatoranteil zwischen 0,5 und 10 Gew.-% und insbesondere zwischen 1,0 und 5,0 Gew.-%, wiederum bezogen auf die Polysaccharid-Komponente, liegt.

Die Verwendung von Katalysatoren ist für bestimmte Modifikationsreaktionen erforderlich, wobei Art und Menge des Katalysators stark vom Reaktionstyp abhängig sind.

Im folgenden werden Modifizierungsreagenzien aufgeführt, die für das erfindungsgemäße Verfahren eingesetzt werden können:
Epoxide, wie z. B. Glycidolderivate, epoxyfunktionalisierte Polysiloxane, epoxyfunktionalisierte quartäre
Ammoniumverbindungen (z. B. 2,3-Epoxypropyltrimethylammoniumchlorid, Quab® 151) und Alkylenoxide reagieren in Gegenwart basischer Katalysatoren mit Hydroxygruppen der Polysaccharide unter Bildung von Ethern. Polysaccharide mit Carbonsäurefunktionen (wie z. B. Alginate, niedrig veresterte Pektine und Xanthane) reagieren mit Epoxiden auch in Abwesenheit von Katalysatoren zu Carbonsäureestern.

Zur Veretherung von Polysacchariden eignen sich auch Alkylhalogenide und Derivate wie Alkylchloride, Chloressigsäure und ihre Salze, Halogehhydrine wie Epichlorhydrin oder 3-Chlor-2-hydroxypropyltrimethylammoniumchlorid (Quab® 188), Mono- und Dialkylsulfate, weiterhin die Michael-Akzeptoren Acrylsäure, Acrylsäureester, Acrylamid, Maleamidsäuren (z. B. N-Octadecylmaleamidsäure), sowie deren Ester oder Derivate. Hierbei kann gegebenenfalls der Einsatz katalytischer oder stöchiometrischer Mengen an Basen erforderlich sein.

Carbonsäuren und deren Derivate sind ebenfalls bevorzugte Modifikationsreagenzien, die mit Polysacchariden unter Bildung von Estern zur Reaktion gebracht werden können. Geeignet sind vor allem Säurechloride oder Anhydride der Fettsäuren, Maleinsäureanhydrid, Succinsäureanhydrid, Acetanhydrid oder Acetylchlorid.

Pektine enthalten Carbonsäuremethylesterfunktionen, die mit Ammoniak oder primären oder sekundären Alkyl- oder Arylaminen zu Amiden funktionalisiert werden können. Neben Ammoniak oder Ammoniaklösungen sind insbesondere langkettige Alkylamine wie Fettamine von Interesse. Natürlich können auch geeignete Mischungen der genannten Reagenzien oder vergleichbarer Verbindungen eingesetzt werden sofern diese untereinander sowie mit den ggf. eingesetzten Katalysatoren und Reaktionsbedingungen kompatibel sind.

Das erfindungsgemäße Verfahren ist besonders dann gut durchzuführen, wenn das Modifizierungsreagenz in Mengen von 0,1 bis 300 Gew.-%, bezogen auf die Polysaccharid-Komponente, verwendet wird, wobei Anteile zwischen 1,0 und 150 Gew.-%, insbesondere zwischen 10 und 100 Gew.-% und besonders bevorzugt zwischen 20 und 50 Gew.-% als besonders geeignet gelten. Selbstverständlich ist die notwendige Menge an Modifizierungsreagenz abhängig vom gewünschten Substitutionsgrad des Produktes und der Reaktionsausbeute und Selektivität der Modifizierungsreaktion, weshalb die geeignete Menge im Einzelfall bestimmt werden muss.

Es hat sich zwar überraschend herausgestellt, dass das beanspruchte Verfahren nur minimale Mengen an Flüssigkeit benötigt, allerdings kann es in Abhängigkeit vom eingesetzten Polysaccharid und dem jeweiligen Modifizierungsreagenz notwendig werden, zusätzliche Hilfsstoffe bei der mechanischen Bearbeitung einzusetzen. Als bevorzugter Vertreter der zusätzlichen Hilfsstoffe sei an erster Stelle Wasser genannt; aber auch Öle, Alkohole, Polyole, Polyglykole, Polyglykolether, Borate und pyrogene oder Fällungskieselsäuren können eingesetzt werden. Dabei haben sich Mengen als besonders günstig erwiesen, die zwischen 1 und 50 Gew.-%, bezogen auf die Polysaccharid-Komponente, liegen.

Die Qualität der mit dem erfindungsgemäßen Verfahren erzielten chemischen Modifizierung kann durch die Auswahl der Reaktionstemperatur zusätzlich beeinflusst werden. Die genannten Vorteile des Verfahrens gemäß Erfindung werden besonders dann deutlich, wenn Temperaturen zwischen 0 und 150 °C gewählt werden, wobei die jeweilige Temperatur durch Erwärmen und/oder Kühlen mindestens einer Walze eingestellt wird. Alternativ oder zusätzlich kann allerdings auch das Reaktionsgemisch nach der jeweiligen mechanischen Behandlung erwärmt oder gekühlt werden, gegebenenfalls auch unter Überdruck von vorzugsweise 0 bis 5 bar.

Falls erforderlich, kann natürlich auch ein zusätzliches Lösemittel zugesetzt werden, wofür sich insbesondere aufgrund der chemischen Zusammensetzung und Struktur des Ausgangsmaterials Wasser als geeignet gezeigt hat. Die zusätzlichen Lösemittelmengen sollten vorzugsweise unter 70 Gew.-% betragen, wobei Mengen < 50 Gew.-% besonders bevorzugt und Mengen < 30 Gew.-% als insbesondere bevorzugt angesehen werden. Die jeweiligen Mengenangaben des zusätzlichen Lösemittels beziehen sich auf das gesamte Reaktionsgemisch.

Mit dem vorgeschlagenen Verfahren können Polysaccharide auf einfache Art und Weise homogen chemisch modifiziert werden, ohne dass dabei negative Auswirkungen durch bspw. hohe Temperaturen und Drücke auftreten. Die beim erfindungsgemäßen Verfahren ebenfalls auftretenden Scherkräfte bewirken eine homogene Vermischung, wobei sie nur kurzzeitig auftreten und die dabei entstehende Wärme durch die große Walzenoberfläche sehr effizient abgeführt wird. Das einfache und effektive Verfahren ist dabei nicht auf bestimmte Polysaccharide beschränkt und das Verfahren kann durch die Auswahl der Verfahrensbedingungen und den Zusatz von Hilfsstoffen oder unbedenkliche Lösemittel auf den jeweiligen Anwendungsfall in einfacher Weise angepasst werden.

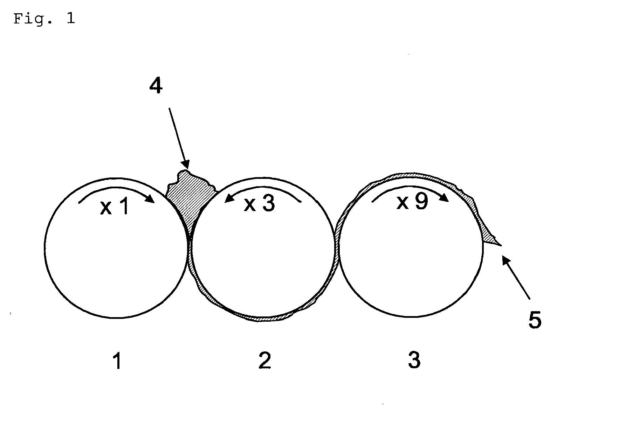

Fig. 1 verdeutlicht die Arbeitsweise des beanspruchten Verfahrens. Bei der gezeigten Ausführungsform erfolgt die Modifizierung mit drei gegenläufig rotierenden Walzen (1, 2, 3), deren Rotationsgeschwindigkeiten sich jeweils um den Faktor 3 unterscheiden. Eine Mischung aus Polysaccharid und Modifikationsreagenz (4) wird zwischen die erste Walze (1) und die zweite Walze (2) aufgebracht und nach der mechanischen Behandlung mit einem Abstreifer (5) von der dritten Walze (3) abgenommen .

Die nachfolgenden Beispiele verdeutlichen die Vorteile des erfindungsgemäßen Verfahrens.

### Beispiele

### Beispiel 1:

50 g Johannisbrotkernmehl wurden mit einer Lösung von 1,5 g Natriumhydroxid in 50 ml destilliertem Wasser vermischt und durch zweimaliges Passieren über ein Dreiwalzwerk homogenisiert. Die jeweils benachbarten Walzen unterschieden sich in ihrer Rotationsgeschwindigkeit um 200 %, wobei die Absolutgeschwindigkeiten für Walze 1 0,14 m/sec, für Walze 2 0,42 m/sec und für Walze 3 1,25 m/sec betrugen. Zur resultierenden Masse wurden 20 g eines bis-Epoxy-Polydimethylsiloxans gegeben und das Gemisch wurde erneut zweimal mit dem Dreiwalzwerk bei identischen Bedingungen homogenisiert. Das Produkt wurde für 4 h in einem geschlossenen Gefäß auf 105 °C erhitzt, in 300 ml 66 % Isopropanol mit Hilfe eines Ultra-Turrax dispergiert und mit 10 % HCl auf pH 7,0 eingestellt. Der Feststoff wurde abgesaugt, mit 300 ml Isopropanol gewaschen und im Trockenschrank bei 60 °C getrocknet. Der Substitutionsgrad wurde mittels NMR nach Hydrolyse mit DCl/D₂O zu 0,001 Polydimethylsiloxan-Einheiten pro Monosaccharid-Einheit bestimmt.

### Beispiel 2:

100 g slow set Pektin (DE 61,5) wurden mit einer Mischung aus 43 ml 25%iger Ammoniaklösung, 70 ml destilliertem Wasser und 38 ml Isopropanol grob vermischt und bei 10 °C mit einem Dreiwalzwerk homogenisiert. Die jeweils benachbarten Walzen unterschieden sich in ihrer Rotationsgeschwindigkeit um 200 %, wobei die Absolutgeschwindigkeiten für Walze 1 0,14 m/sec, für Walze 2 0,42 m/sec und für Walze 3 1,25 m/sec betrugen. Das Produkt wurde 4 h stehen gelassen, nachfolgend in 50%igen Isopropanol aufgenommen, abgesaugt, mit 300 ml 50 % Isopropanol gewaschen und getrocknet. Das Produkt wies einen Amidierungsgrad (DA) von 22 und einen DE von 29 auf.

### Beispiel 3:

40 g Hydroxypropylguar wurden mit einer Lösung von 0,4 g Natriumhydroxid und 16 g Glycidyltrimethylammoniumchlorid (70%ige Lösung in Wasser) in 7 ml Wasser vermischt und über ein Dreiwalzwerk passiert. Die jeweils benachbarten Walzen unterschieden sich in ihrer Rotationsgeschwindigkeit um 200 %, wobei die Absolutgeschwindigkeiten für Walze 1 0,14 m/sec, für Walze 2 0,42 m/sec und für Walze 3 1,25 m/sec betrugen. Das Gemisch wurde 20 h auf 50 °C erhitzt, anschließend in Isopropanol suspendiert, mit Citronensäure neutralisiert und der Feststoff abgesaugt. Das Produkt wurde im Trockenschrank bei 100 °C getrocknet und vermahlen. Der Substitutionsgrad des Produktes lag bei 0,18 Hydroxypropyltrimethylammonium-Gruppen pro Monosaccharid-Einheit.

### Beispiel 4:

10 g Guarkernmehl wurden mit einer Lösung von 3 g Natriumhydroxid in 15 ml destilliertem Wasser vermischt und zweimal über ein Dreiwalzwerk passiert. Die jeweils benachbarten Walzen unterschieden sich in ihrer Rotationsgeschwindigkeit um 200 %, wobei die Absolutgeschwindigkeiten für Walze 1 0,14 m/sec, für Walze 2 0,42 m/sec und für Walze 3 1,25 m/sec betrugen. Die resultierende gelbliche Masse wurde 1 h bei Raumtemperatur gelagert, anschließend mit 7,3 g N-Octadecylmaleamidsäure (HOOC-CH=CH-CONH-C₁₈H₃₇) versetzt und erneut zweimal über das Dreiwalzwerk bei sonst identischen Bedingungen homogenisiert. Das Produkt wurde 4 h in einem geschlossenen Gefäß auf 60 °C erhitzt, in 100 ml 60 % Isopropanol aufgenommen, mittels eines Ultra-Turrax dispergiert und die Suspension mit 10 % HCl auf pH 7,0 eingestellt. Der Feststoff wurde auf einer Glasfritte filtriert und im Trockenschrank bei 60 °C getrocknet. Das Produkt wies neue, starke IR-Absorptionen bei 1641 cm⁻¹ sowie bei 2919 und 2849 cm⁻¹ auf, charakteristisch für die C=O- bzw. C-H-Streckschwingungen des eingeführten Substituenten.

## Patentansprüche

1. Verfahren zur chemischen Modifizierung einer Polysaccharid-Komponente mit Hilfe einer mechanischen Vorrichtung und mindestens eines Modifizierungsreagenzes, **dadurch gekennzeichnet, dass** die Polysaccharid-Komponente mindestens einmal einer mechanischen Behandlung mit einem Walzwerk unterworfen wird, bei der mindestens zwei benachbarte und gegenläufige Walzen mit unterschiedlichen Geschwindigkeiten rotieren und die Polysaccharid-Komponente vor und/oder während der mechanischen Behandlung mit dem Modifizierungsreagenz vermischt wird und das Modifizierungsreagenz ausgewählt ist aus der Reihe Epoxide, Alkylhalogenide, Chloressigsäure, Chloracetate, Halogenhydrine, Mono- und Dialkylsulfate, Ammoniak, primäre oder sekundäre Alkyl- oder Arylamine, Acrylsäure, Acrylsäureester, Acrylamid, Maleamidsäurederivate, Carbonsäuren, Carbonsäurechloride, Carbonsäureanhydride und Mischungen dieser Verbindungen.

2. Verfahren nach Anspruch 1,
**dadurch gekennzeichnet,**
**dass** ein Zwei-, Drei- oder Vierwalzwerk verwendet wird.

3. Verfahren nach einem der Ansprüche 1 oder 2,
**dadurch gekennzeichnet,**
**dass** die mechanische Behandlung ein- bis dreimal wiederholt wird.

4. Verfahren nach einem der Ansprüche 1 bis 3,
**dadurch gekennzeichnet,**
**dass** die Drehgeschwindigkeiten der benachbarten Walzen sich um 10 bis 500 %, bevorzugt um 100 bis 300 %, besonders bevorzugt um 200 %, unterscheiden.

5. Verfahren nach einem der Ansprüche 1 bis 4,
**dadurch gekennzeichnet,**
**dass** die Polysaccharid-Komponente ausgewählt ist aus der Reihe Pektin, Galactomannane, Alginate, Agar, Carrageenane, Xanthane, Scleroglukane, Stärken, Cellulosen, Gellane, Pullulane oder Chitosane oder Mischungen dieser Verbindungen.

6. Verfahren nach Anspruch 5,
**dadurch gekennzeichnet,**
**dass** die Polysaccharid-Komponente ein Galactomannan aus der Reihe Johannisbrotkernmehl, Guarkernmehl, Tara-Galactomannan, Cassia-Galactomannan oder Tamarinden-Galactomannan ist.

7. Verfahren nach einem der Ansprüche 1 bis 6,
**dadurch gekennzeichnet,**
**dass** das Modifizierungsreagenz in einer Menge von 0,1 bis 300 Gew.-%, bezogen auf die Polysaccharid-Komponente, verwendet wird.

8. Verfahren nach einem der Ansprüche 1 bis 7,
**dadurch gekennzeichnet,**
**dass** bei der mechanischen Behandlung zusätzlich ein Hilfsstoff aus der Reihe Wasser, Öle, Alkohole, Polyole, Polyglykole, Polyglykolether, Borate und pyrogenen oder Fällungskieselsäuren eingesetzt wird.

9. Verfahren nach Anspruch 8,
**dadurch gekennzeichnet,**
**dass** der Hilfsstoff in einer Menge von 1 bis 50 Gew.-%, bezogen auf die Polysaccharid-Komponente eingesetzt wird.

10. Verfahren nach einem der Ansprüche 1 bis 9,
**dadurch gekennzeichnet,**
**dass** die mechanische Behandlung in Gegenwart mindestens eines Katalysators durchgeführt wird, wobei die Menge an Katalysator von 0,1 bis 30 Gew.-%, bevorzugt von 0,5 bis 10 Gew.-% und insbesondere von 1,0 bis 5,0 Gew.-%, bezogen auf die Polysaccharid-Komponente, beträgt.

11. Verfahren nach Anspruch 10,
**dadurch gekennzeichnet,**
**dass** der Katalysator ausgewählt ist aus der Reihe Basen, Säuren und Radikalstartern.

12. Verfahren nach einem der Ansprüche 1 bis 11,
**dadurch gekennzeichnet,**
**dass** es bei Temperaturen von 0 bis 150 °C durchgeführt wird, wobei die Temperatur durch Erwärmen und/oder Kühlen mindestens einer Walze und/oder durch Erwärmen oder Kühlen des Reaktionsgemisches nach der mechanischen Behandlung eingestellt wird.

13. Verfahren nach einem der Ansprüche 1 bis 12,
**dadurch gekennzeichnet,**
**dass** zusätzlich ein Lösemittel, vorzugsweise Wasser, zugesetzt wird.

14. Verfahren nach Anspruch 13,
**dadurch gekennzeichnet,**
**dass** das Lösemittel in einer Menge von weniger als 70 Gew.-%, vorzugsweise weniger als 50 Gew.-% und insbesondere weniger als 30 Gew.-%, bezogen auf das gesamte Reaktionsgemisch, eingesetzt wird.

## Claims

1. Method for chemically modifying a polysaccharide component with the aid of a mechanical device and at least one modifying reagent, **characterized in that** the polysaccharide component is subjected at least once to a mechanical treatment with a roll mill, during which at least two adjacent and counter-rotating rolls rotate at different speeds, and the polysaccharide component is mixed with the modifying reagent before and/or during the mechanical treatment, and the modifying reagent is selected from the series epoxides, alkyl halides, chloroacetic acid, chloroacetates, halohydrins, mono- and dialkyl sulfates, ammonia, primary or secondary alkyl- or arylamines, acrylic acid, acrylic esters, acrylamide, maleamide acid derivatives, carboxylic acids, carboxylic acid chlorides, carboxylic anhydrides and mixtures of these compounds.

2. Method according to Claim 1,
**characterized in that**
a two-, three- or four-roll mill is used.

3. Method according to one of Claims 1 or 2, **characterized in that**
the mechanical treatment is repeated one to three times.

4. Method according to one of Claims 1 to 3, **characterized in that**
the rotation speeds of the adjacent rolls differ by 10 to 500%, preferably by 100 to 300%, particularly preferably by 200%.

5. Method according to one of Claims 1 to 4, **characterized in that**
the polysaccharide component is selected from the series of pectin, galactomannans, alginates, agar, carrageenans, xanthans, scleroglucans, starches, celluloses, gellans, pullulans or chitosans or mixtures of these compounds.

6. Method according to Claim 5,
**characterized in that**
the polysaccharide component is a galactomannan from the series carob seed flour, guar seed flour, tara galactomannan, cassia galactomannan or tamarind galactomannan.

7. Method according to one of Claims 1 to 6, **characterized in that**
the modifying reagent is used in an amount of from 0.1 to 300% by weight, based on the polysaccharide component.

8. Method according to one of Claims 1 to 7, **characterized in that**
during the mechanical treatment an auxiliary from the series water, oils, alcohols, polyols, polyglycols, polyglycol ethers, borates and fumed or precipitated silicas is additionally used.

9. Method according to Claim 8,
**characterized in that**
the auxiliary is used in an amount of from 1 to 50% by weight, based on the polysaccharide component.

10. Method according to one of Claims 1 to 9, **characterized in that**
the mechanical treatment is carried out in the presence of at least one catalyst, where the amount of catalyst is from 0.1 to 30% by weight, preferably from 0.5 to 10% by weight and in particular from 1.0 to 5.0% by weight, based on the polysaccharide component.

11. Method according to Claim 10,
**characterized in that**
the catalyst is selected from the series of bases, acids and free-radical initiators.

12. Method according to one of Claims 1 to 11, **characterized in that**
it is carried out at temperatures of from 0 to 150°C, where the temperature is adjusted by heating and/or cooling at least one roll and/or by heating or cooling the reaction mixture after the mechanical treatment.

13. Method according to one of Claims 1 to 12, **characterized in that**
a solvent, preferably water, is additionally added.

14. Method according to Claim 13,
**characterized in that**
the solvent is used in an amount of less than 70% by weight, preferably less than 50% by weight and in particular less than 30% by weight, based on the total reaction mixture.

## Revendications

1. Procédé pour la modification chimique d'un composant polysaccharidique à l'aide d'un dispositif mécanique et d'au moins un réactif de modification, **caractérisé en ce qu'**on soumet le composant polysaccharidique au moins une fois à un traitement mécanique à l'aide d'un broyeur à cylindres, dans lequel au moins deux cylindres voisins et contrarotatifs tournent à différentes vitesses et avant et/ou pendant le traitement mécanique on mélange le composant polysaccharidique avec le réactif de modification et le réactif de modification est choisi dans la série constituée par des époxydes, des halogénures d'alkyle, l'acide chloracétique, des chloracétates, des halogénohydrines, des sulfates de mono- et dialkyle, l'ammoniac, des alkylamines ou arylamines primaires ou secondaires, l'acide acrylique, des esters d'acide acrylique, l'acrylamide, des dérivés d'acide maléamique, des acides carboxyliques, des chlorures d'acyle, des anhydrides d'acides carboxyliques et des mélanges de ces composés.

2. Procédé selon la revendication 1,
**caractérisé en ce**
**qu'**on utilise un broyeur à deux, trois ou quatre cylindres.

3. Procédé selon l'une quelconque des revendications 1 ou 2,
**caractérisé en ce**
**qu'**on répète une à trois fois le traitement mécanique.

4. Procédé selon l'une quelconque des revendications 1 à 3,
**caractérisé en ce que** les vitesses de rotation des cylindres voisins diffèrent de 10 à 500 %, de préférence de 100 à 300 %, de façon particulièrement préférée de 200 %.

5. Procédé selon l'une quelconque des revendications 1 à 4,
**caractérisé en ce que**
le composant polysaccharidique est choisi dans la série constitué par la pectine, les galactomannanes, les alginates, la gélose, les carraghénanes, les xanthanes, les scléroglucanes, les amidons, les celluloses, les gellanes, les pullulanes ou les chitosanes ou des mélanges de ces composés.

6. Procédé selon la revendication 5,
**caractérisé en ce que**
le composant polysaccharidique est un galactomannane choisi dans la série constitué par la farine de graines de caroube, la farine de graines de guar, le galactomannane de tara, le galactomannane de cassia ou le galactomannane de tamarin.

7. Procédé selon l'une quelconque des revendications 1 à 6,
**caractérisé en ce**
**qu'**on utilise le réactif de modification en une quantité de 0,1 à 300 % en poids, par rapport au composant polysaccharidique.

8. Procédé selon l'une quelconque des revendications 1 à 7,
**caractérisé en ce que**
dans le traitement mécanique on utilise en outre un adjuvant choisi dans la série constituée par l'eau, des huiles, des alcools, des polyols, des polyglycols, des éthers de polyglycol, des borates et des acides siliciques précipités ou pyrogénés.

9. Procédé selon la revendication 8,
**caractérisé en ce**
**qu'**on utilise l'adjuvant en une quantité de 1 à 50 % en poids, par rapport au composant polysaccharidique.

10. Procédé selon l'une quelconque des revendications 1 à 9,
**caractérisé en ce**
**qu'**on effectue le traitement mécanique en présence d'au moins un catalyseur, la quantité du catalyseur valant de 0,1 à 30 % en poids, de préférence de 0,5 à 10 % en poids et en particulier de 1,0 à 5,0 % en poids, par rapport au composant polysaccharidique.

11. Procédé selon la revendication 10,
**caractérisé en ce que**
le catalyseur est choisi dans la série constituée par des bases, des acides et des amorceurs de radicaux.

12. Procédé selon l'une quelconque des revendications 1 à 11,
**caractérisé en ce**
**qu'**on l'effectue à des températures de 0 à 150 °C, en ajustant la température par chauffage et/ou refroidissement d'au moins un cylindre et/ou par chauffage ou refroidissement du mélange réactionnel après le traitement mécanique.

13. Procédé selon l'une quelconque des revendications 1 à 12,
**caractérisé en ce**
**qu'**on utilise en plus un solvant, l'eau de préférence.

14. Procédé selon la revendication 13,
**caractérisé en ce**
**qu'**on utilise le solvant en une quantité de moins de 70 % en poids, de préférence de moins de 50 % en poids et en particulier de moins de 30 % en poids, par rapport au mélange réactionnel total.
